# EUROPÄISCHE PATENTANMELDUNG

(11) **EP 3 736 518 A1**
(43) Veröffentlichungstag der Anmeldung: **11.11.2020**
(21) Anmeldenummer: 19020326.5
(22) Anmeldetag: 09.05.2019
(51) Int. Cl.: F25J 1/00

(54) **VERFAHREN ZUM BETREIBEN EINER VERFAHRENSTECHNISCHEN ANLAGE**

(71) Anmelder: Linde GmbH, 82049 Pullach (DE)
(72) Erfinder: Hoffmann, Rainer, 82008 Unterhaching (DE); Slaby, Oliver, 81547 München (DE); Erkens, Frederik, 42859 Remscheid (DE)
(74) Vertreter: Imhof, Dietmar

(57) **Zusammenfassung**

Die Erfindung betrifft ein Verfahren zum Betreiben einer verfahrenstechnischen Anlage (100) mittels einer modellprädiktiven Regelung (140), bei der unter Verwendung eines Modells (142) wenigstens eines Prozesses der verfahrenstechnischen Anlage (100) und unter Beachtung eines Sollwertes (175) für eine Regelgröße ein Wert (130) für eine Stellgröße eines Regelkreises für den wenigstens einen Prozess ermittelt und eingestellt wird, wobei das Modell (142) mittels eines neuronalen Netzes abgebildet wird, sowie ein Steuerungs- und Regelungssystem (140, 160) und eine verfahrenstechnische Anlage (100).

## Beschreibung

Die Erfindung betrifft ein Verfahren zum Betreiben einer verfahrenstechnischen Anlage, insbesondere einer Luftzerlegungsanlage, sowie ein Steuerungs- und Regelungssystem zur Durchführung des Verfahrens und eine verfahrenstechnische Anlage.

### Stand der Technik

Als verfahrenstechnische Anlagen werden üblicherweise Anlagen zur Durchführung von Stoffänderungen und/oder Stoffumsetzungen mit Hilfe zweckgerichteter physikalischer und/oder chemischer und/oder biologischer und/oder nuklearer Wirkungsabläufe verstanden. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen.

Ein typischer Vertreter der Zerlegung eines Einsatzfluidstroms in einzelne Fluidkomponenten ist die Luftzerlegung. Die Herstellung von Luftprodukten in flüssigem oder gasförmigem Zustand durch Tieftemperaturzerlegung von Luft in (kryogenen) Luftzerlegungsanlagen (engl. air separation unit, ASU) ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Luftzerlegungsanlagen weisen Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand (beispielsweise flüssigem Sauerstoff, LOX, gasförmigem Sauerstoff, GOX, flüssigem Stickstoff, LIN und/oder gasförmigem Stickstoff, GAN), also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein. Destillationssäulen werden auch als Destillationskolonnen bezeichnet.

Luftzerlegungsanlagen werden üblicherweise statisch (oder allenfalls mit einer sehr geringen Dynamik) betrieben. Dabei wird ein Einsatzluftstrom mittels eines Hauptluftverdichters angesaugt und verdichtet. Die Verdichterleistung wird üblicherweise konstant auf dem Betriebspunkt gehalten, für den die Anlage ausgelegt ist.

Eine verfahrenstechnische Anlage wie beispielsweise eine Luftzerlegungsanlage ist typischerweise eine sehr komplexe Anlage, bei der viele verschiedene Parameter möglichst genau eingestellt werden müssen. Dies erfolgt in der Regel im Wege einer Regelung, d.h. um für eine Regelgröße einen vorgegebenen Sollwert zu erreichen, wird eine entsprechende Stellgröße gezielt ermittelt und eingestellt.

Typische Arten der Regelung bzw. von Reglern sind beispielsweise ein sog. PID-Regler oder ein Kaskadenregler. Ebenso kann eine sog. modellprädiktive Regelung zum Einsatz kommen.

Die modellprädiktive Regelung (MPC) ist ein Regelungskonzept, bei dem durch die Prädiktion des zukünftigen Systemverhaltens in jedem Abtastschritt, d.h. einem bestimmten Zeitintervall, eine sehr hohe Regelungsgüte erzielt werden kann. Im Gegensatz zu klassischen Regelungskonzepten können Eingangs-, Ausgangs- und Zustandsbeschränkungen explizit berücksichtigt werden. Hierbei wird insbesondere basierend auf einem Modell des zu regelnden Systems bzw. der technischen Anlage oder zumindest entsprechender Prozesse ein möglichst optimaler Wert für eine Stellgröße ermittelt, um eine Regelgröße auf einen vorgegebenen Sollwert zu regeln. Dies erfolgt beispielsweise im Wege bestimmter Optimierungsberechnungen.

Für die klassische Regelung, aber auch die modellprädiktive Regelung, sind dabei in der Regel physikalische Beschreibungen der technischen Anlage bzw. der betreffenden, zu regelnden Prozesse nötig. Die konkreten Parameter oder auch etwaige Randbedingungen sind jedoch oftmals nicht genau genug bekannt, um den Prozess komplett oder hinreichend genau abbilden zu können.

Möglich ist es zwar, anhand eines realen Betriebs der technischen Anlage solche Parameter im Rahmen von Tests zu ermitteln, solche sind jedoch typischerweise sehr zeit- und kostenaufwändig.

Ein weiteres Problem, insbesondere bei großen bzw. komplexen verfahrenstechnischen Anlagen ist, dass verschiedene, zu regelnde Prozesse bzw. die zugehörigen Regelkreise sich gegenseitig beeinflussen, was zu einer schwierigeren bzw. weniger genauen Regelung insgesamt führt.

Die vorliegende Erfindung stellt sich vor diesem Hintergrund die Aufgabe, den Betrieb einer verfahrenstechnischen Anlage, bei der einer oder mehrere Prozesse zu regeln sind, zu verbessern.

### Offenbarung der Erfindung

Diese Aufgabe wird durch ein Verfahren zum Betreiben einer verfahrenstechnischen Anlage sowie ein Steuerungs- und Regelungssystem zur Durchführung des Verfahrens und eine technische Anlage mit den Merkmalen der unabhängigen Patentansprüche gelöst. Ausgestaltungen sind Gegenstand der abhängigen Patentansprüche sowie der nachfolgenden Beschreibung.

### Vorteile der Erfindung

Die vorliegende Erfindung betrifft ein Verfahren zum Betreiben einer verfahrenstechnischen Anlage, insbesondere einer Luftzerlegungsanlage, mittels einer modellprädiktiven Regelung. Hierbei wird insbesondere ein bestimmter Prozess im Rahmen des Betriebs der verfahrenstechnischen Anlage geregelt. Bei dieser modellprädiktiven Regelung wird ein Wert für eine Stellgröße eines Regelkreises für den wenigstens einen Prozess unter Verwendung eines Modells wenigstens eines Prozesses der verfahrenstechnischen Anlage und unter Beachtung eines Sollwertes für eine Regelgröße ermittelt und eingestellt. Bei dem Modell handelt es sich insbesondere um ein nicht-lineares Modell, mit dem komplexere Prozesse abgebildet werden können.

Unter der Beachtung des Sollwerts, der typischerweise vorgegeben wird, ist dabei insbesondere zu verstehen, dass die Regelgröße durch die Stellgröße derart verändert werden soll, dass sie den Sollwert, ausgehend von einem aktuellen Istwert, möglichst genau erreicht. Das Modell muss dabei nicht die komplette verfahrenstechnische Anlage abbilden, vielmehr ist typischerweise ausreichend, dass die im Rahmen des zu regelnden Prozesses relevanten und beeinflussten und/oder beeinflussenden Parameter entsprechend im Modell vorhanden bzw. abgebildet sind.

Wie eingangs schon erwähnt, wird im Rahmen einer modellprädiktiven Regelung anhand eines solchen Modells, ausgehend von einem Istwert der Regelgröße, berechnet, wie sich die Regelgröße bei Variation der Stellgröße ändert. Damit kann - im Wege einer Optimierung - der bestmögliche Wert für die Stellgröße gefunden werden, mit dem die Regelgröße den Sollwert möglichst genau erreicht.

Bei dem vorgeschlagenen Verfahren wird das Modell nun mittels eines (künstlichen) neuronalen Netzes abgebildet. Ein solches (künstliches) neuronales Netz bzw. ein auf diese Weise abgebildetes Modell kann aus bestimmten Eingangsmustern bestimmte Ausgangsmuster erzeugen. Der besondere Vorteil eines solchen neuronalen Netzes bzw. eines darauf beruhenden Modells gegenüber einem herkömmlichen Modell ist nun derjenige, dass das neuronale Netz (automatisiert) eingelernt bzw. trainiert werden kann, wodurch das damit abgebildete Modell, also insbesondere hinsichtlich der für bestimmte Eingangsmuster ausgegebenen Ausgangsmuster, verbessert werden kann.

Während, wie eingangs erwähnt, insbesondere bei komplexen verfahrenstechnischen Anlagen für ein Modell nötige Parameter nur schwierig oder zeit- und kostenintensiv zu ermitteln sind, kann durch die Verwendung des vorgeschlagenen neuronalen Netzes eine einfache, typischerweise auch schnelle und vor allem sehr genaue Ermittlung eines solchen Modells erfolgen.

Im Allgemeinen besteht ein (künstliches) neuronales Netz aus verschiedenen Schichten bzw. Layern (Input Layer, Hidden Layer und Output Layer) und deren Interaktionen bzw. Verknüpfungen, die den Informationsfluss zwischen den einzelnen Neuronen beschreiben. Ein problemspezifisches neuronale Netz, d.h. Anzahl der Inputs / Outputs, der Hidden Layer und deren Verknüpfungen, kann für eine individuelle bzw. konkrete Fragestellung formuliert und an die Trainingsdaten angepasst werden (sogenanntes Hyper Parameter Tuning). Die Input Layer sind typischerweise durch die in das Modell eingehenden Messgrößen bestimmt, z.B. Größen, die gemessen und geregelt werden sollen, und die Output Layer durch die Ausgangsgrößen bzw. Größen, die im Rahmen der Regelung der verfahrenstechnischen Anlage als Stellgrößen zurückgeschrieben werden. Die Hidden Layer werden im Rahmen der Modellbildung unter Berücksichtigung von Modell-Interaktionen und dynamischen Phänomenen problemspezifisch gewählt. Eine allgemeine Darstellung der Theorie und Anwendung von Neuronalen Netzen kann z.B. in folgender Darstellung gefunden werden: Neural Networks and Deep Learning: A Textbook, Charu C. Aggarwal.

Dabei ist es besonders bevorzugt, wenn das neuronale Netz basierend auf Daten zu Parametern der verfahrenstechnischen Anlage trainiert wird. Hierbei sind entsprechend Parameter relevant, die für zu regelnde Prozesse relevant sind. Die Daten können dabei insbesondere im Rahmen eines Betriebs der verfahrenstechnischen Anlage ohne Verwendung eines neuronalen Netzes, also bei einer klassischen bzw. herkömmlichen Regelung, gewonnen werden.

In einer solchen klassischen Regelung von verfahrenstechnischen Anlagen werden typischerweise überwiegend PID-Regler verwendet. Hier werden die individuellen Reglerparameter bzw. Beiwerte insbesondere mittels Empirie und Erfahrungswerten eingestellt. Darüber hinaus wird bei der Modellprädiktiven Regelung zweckmäßigerweise unter Zuhilfenahme von linearen oder nichtlinearen Modellen (insbesondere basierend auf thermodynamischen Annahmen) eine Vorhersage des verfahrenstechnischen Prozesses zur Regelung genutzt. Zur Erzeugung der Modelle können die Abhängigkeiten aufwendig über sogenannte Step-Tests auf der realen Anlage erzeugt werden oder mittels mathematischer Modellierung unter Berücksichtigung der thermodynamischen Gegebenheiten formuliert werden. Zur Lösung des modellprädiktiven Regelungsproblems müssen dann rechenintensive mathematische Lösungsverwahren angewandt und zum Teil auch entwickelt werden.

Die Nutzung der Anlagendaten und des Trainierens eines neuronalen Netzes vereinfacht die Modellbildung stark, da die oben beschriebenen Ansätze nicht durchgeführt werden müssen: Beim klassischen Modellanpassen mittels Step-Tests werden immer nur wenige Parameter variiert, während alle anderen Parameter festgehalten werden. Der Aufwand steigt nicht linear, sondern exponentiell mit der Zahl der unbekannten Parameter. Bei der Verwendung eines black-box-Modells wie eines neuronalen Netzes werden hingegen alle freien Parameter während des Trainings gleichzeitig angepasst.

Besonders bevorzugt wird das neuronale Netz nur dann trainiert, wenn eine Vorhersagequalität der modellprädiktiven Regelung außerhalb eines vorgegebenen Bereichs liegt. Hierzu ist es zunächst zweckmäßig, wenn die verfahrenstechnische Anlage bzw. deren Betrieb laufend (oder zumindest wiederholt) überwacht wird, und zwar insbesondere hinsichtlich der Vorhersagequalität der modellprädiktiven Regelung. Wird dann festgestellt, dass eine gewünschte Vorhersagequalität nicht oder nicht mehr erreicht wird, d.h. dass sie außerhalb eines vorgegebenen Bereichs liegt, kann das neuronale Netz bzw. das dadurch abgebildete Modell trainiert werden.

Da das neuronale Netz insbesondere kontinuierlich parallel zur tatsächlichen Anlage ausgewertet wird, können die Modellvorhersagen mit dem tatsächlichen Anlagenverhalten direkt verglichen und über geeignete Normen (wie z.B. quadratische Fehlerabweichung) im Sinne einer Vorhersagequalität quantifiziert werden.

Zweckmäßig ist auch, wenn bei einer initialen Inbetriebnahme der verfahrenstechnischen Anlage bzw. der modellprädiktiven Regelung - und damit insbesondere zusätzlich zu Zeiten bzw. Phasen, nach denen eine Abweichung der Vorhersagequalität festgestellt wurde - das neuronales Netz auf die erwähnte Weise trainiert wird. Damit kann das neuronale Netz bereits zu Beginn eine ausreichend hohe Güte erreichen bzw. gewährleisten. Im Rahmen der späteren Phasen des Trainierens kann dann aber nicht nur auf die im Rahmen des Betriebs der verfahrenstechnischen Anlage ohne Verwendung des neuronalen Netzes, also bei einer klassischen bzw. herkömmlichen Regelung, gewonnen Daten zurückgegriffen werden, sondern auch auf während des Betriebs mit der Verwendung des neuronalen Netzes gewonnene Daten dieser Parameter. Damit ist also eine schrittweise Anpassung bzw. Verbesserung des Modells bzw. neuronalen Netzes möglich.

Vorteilhafterweise wird die verfahrenstechnischen Anlage mittels der modellprädiktiven Regelung ohne Verwendung eines neuronalen Netzes (also beispielsweise mittels eines herkömmlichen Modells), insbesondere automatisiert, betrieben, während das neuronale Netz trainiert wird, d.h. die verfahrenstechnischen Anlage wird mit einer klassischen bzw. herkömmlichen Regelung betrieben. Damit kann gewährleistet werden, dass die verfahrenstechnische Anlage auch während des Trainierens des neuronalen Netzes ordnungsgemäß weiterbetrieben werden kann. Ein Stillstand ist nicht nötig.

Besonders zweckmäßig ist es dabei dann auch, wenn zwischen Phasen eines Betriebs, in denen das mittels des neuronalen Netzes abgebildete Modell verwendet wird, und Phasen, in denen die verfahrenstechnischen Anlage mittels der modellprädiktiven Regelung ohne Verwendung des neuronalen Netzes betrieben wird, automatisiert gewechselt wird. Damit kann die verfahrenstechnische Anlage durchgehend automatisiert betrieben werden, ein Eingriff eines Bedieners ist - im ansonsten ordnungsgemäßen Betrieb - nicht nötig.

Besonders bevorzugt ist bei der verfahrenstechnischen Anlage eine Vielzahl von Prozessen mit jeweils einem Regelkreis mit jeweils einer Stellgröße und einer Regelgröße vorgesehen, wobei mittels der modellprädiktiven Regelung unter Beachtung eines jeweiligen Sollwerts für die jeweilige Regelgröße jeweils ein Wert für die jeweilige Stellgröße ermittelt und eingestellt wird. Mit anderen Worten kann die modellprädiktive Regelung also für eine Vielzahl von Prozessen mit zugehörigen Regelkreisen verwendet werden, und zwar gleichzeitig. Hierzu sollten dann in dem zu verwendenden Modell auch die für sämtliche zu regelnden Prozesse bzw. sämtliche Regelkreise relevanten Parameter und dergleichen beinhaltet sein.

Besonders zweckmäßig ist das Verfahren dann, wenn Prozesse bzw. Regelkreise verwendet werden, die sich wenigstens teilweise gegenseitig beeinflussen, da gerade bei solchen verfahrenstechnischen Anlagen der Vorteil der modellprädiktiven Regelung - und darüber dann auch die Verwendung des neuronalen Netzes - zum Tragen kommt. Insbesondere werden mittels der modellprädiktiven Regelung die Regelgrößen nämlich wenigstens teilweise und zumindest im Wesentlichen gleichzeitig ermittelt und eingestellt, d.h. es wird versucht, für die jeweiligen Regelgrößen den jeweiligen Sollwert zur gleichen oder zumindest in etwa zur gleichen Zeit zu erreichen. Damit kann erreicht werden, dass auch für ansonsten, beispielsweise aufgrund verschiedener Regelgeschwindigkeiten, schwierig in Einklang zu bringende, verschiedene und sich beeinflussende Regelkreise dennoch besonders einfach und schnell geregelt werden kann.

Gegenstand der Erfindung ist weiterhin ein Steuerungs- und Regelungssystem für eine verfahrenstechnische Anlage, insbesondere eine Luftzerlegungsanlage, die dazu eingerichtet ist, ein Verfahren nach einem der vorstehenden Ansprüche durchzuführen. Bei einem solchen Steuerungs- und Regelungssystem kann es sich um eine Recheneinheit (beispielsweise einen Industrierechner, SPS usw.) oder dergleichen handeln, die lokal in einer solchen verfahrenstechnischen Anlage vorgesehen ist und die entsprechend nötigen Daten bzw. Signale als Eingang erhält und entsprechende Daten bzw. Signale nach Verarbeitung ausgeben kann. Sowohl die modellprädiktive Regelung als auch das Trainieren des neuronalen Netzes kann auf einer solchen Recheneinheit stattfinden. Denkbar und mitunter auch zweckmäßig ist es aber auch, wenn das Trainieren des neuronalen Netzes auf eine separate, insbesondere externe Recheneinheit, z.B. eine sog. Cloud, ausgelagert wird, um beispielsweise lokal Ressourcen einzusparen.

Gegenstand der Erfindung ist weiterhin eine verfahrenstechnische Anlage, insbesondere eine Luftzerlegungsanlage, mit einem erfindungsgemäßen Steuerungs- und Regelungssystem.

Die Erfindung wird nachfolgend unter Bezugnahme auf die beigefügte Zeichnung näher erläutert, welche verschiedene Anlagenteile zeigt, anhand derer die erfindungsgemäßen Maßnahmen erläutert werden.

### Kurze Beschreibung der Zeichnung

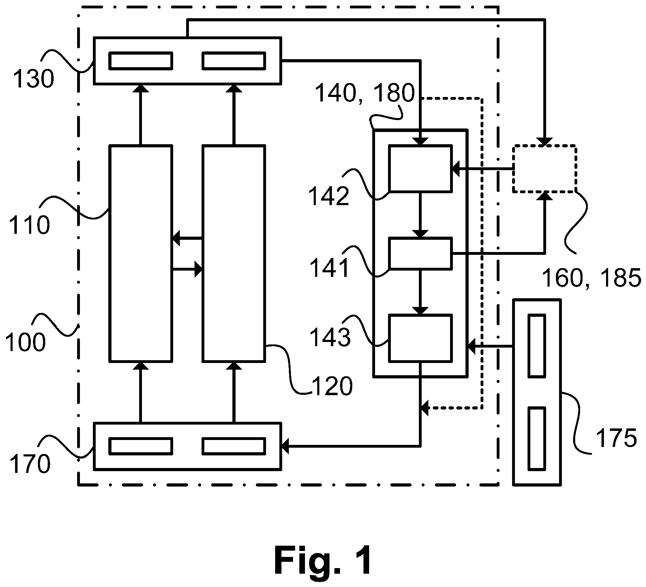

- Figur 1: zeigt schematisch einen Ablauf eines erfindungsgemäßen Verfahrens in einer bevorzugten Ausführungsform.

### Ausführliche Beschreibung der Zeichnung

In Figur 1 ist schematisch ein Ablauf eines erfindungsgemäßen Verfahrens in einer bevorzugten Ausführungsform dargestellt. Hierzu sind für eine beispielhaft als Luftzerlegungsanlage ausgebildete verfahrenstechnische Anlage 100 zwei dort stattfindende bzw. ablaufende Prozesse 110, 120 gezeigt. Solche Prozesse können durch verschiedene Parameter definiert bzw. vorgegeben sein und insbesondere auch einer gewissen Wechselwirkung unterliegen.

Während dieser Prozesse 110, 120 - und damit während des Betriebs der verfahrenstechnischen Anlage 100 -werden verschiedene Aktionen vorgenommen und es können verschiedene Größe gemessen werden, um entsprechende Daten 130 zu erhalten. Beispielsweise kann ein Prozess einen gewissen Gasstrom umfassen, der in Abhängigkeit von einer Ventilstellung (als Stellgröße) einen gewissen Massenfluss (als Regelgröße) erreicht bzw. erreichen soll.

Das vorgeschlagene Verfahren ist - neben der schon erwähnten Luftzerlegungsanlage - für praktisch jede großtechnische Anlage (Luftzerlegungsanlagen, Petrochemische Anlagen, Erdgasanlagen und dergleichen) verwendbar, wie sie eingangs auch schon erwähnt wurden. Dabei kommen als die zu regelnden Prozesse zweckmäßigerweise komplexe Subsysteme in Betracht, die mit klassischen Regelungsverfahren schwierig zu beherrschen sind, wie z.B. die Regelung einer mehrphasigen Leitung, einer Destillationskolonne o.ä. Selbst kleine Teilsysteme können mit klassischen Methoden mitunter überraschend schwierig zu regeln sein, wenn etwa nicht nur die aktuellen Messgrößen (Druck, Füllstand etc.) die Regelstrategie beeinflussen, sondern auch die Historie dieser Messgrößen mit in Betracht ziehen gezogen werden sollen oder müssen (weil z.B. Totzeiten im System vorhanden sind). Mit einem neuronalen Netz lässt sich dies insbesondere erreichen, indem statt eines einfachen Feed-Forward-Neural-Network (FFNN) ein komplexeres Long-Short-Term-Memory (LSTM) verwendet wird, das auch historische Prozessgrößen als Eingangsgrößen verwendet.

Da solche Prozesse typischerweise geregelt werden und somit ein entsprechender Regelkreis vorliegt, werden dabei auch Istwerte entsprechender Regelgrößen erfasst. Im Rahmen der erhaltenen Daten 130 werden diese Istwerte dann einer modellprädiktiven Regelung bzw. einem modellprädiktiven Regler 140 zugeführt, der beispielsweise auf einer geeigneten Recheneinheit 180 ausgeführt wird.

Der modellprädiktive Regler 140 beinhaltet nun ein Modell 142 der verfahrenstechnischen Anlage, das zumindest die relevanten Prozesse 110, 120, die geregelt werden sollen, bzw. die entsprechenden Parameter, abbildet. Das Modell 142 wird dabei auch als neuronales Netz abgebildet bzw. dargestellt.

Anhand der Istwerte und/oder weiterer Daten über die Prozesse können nun - im Rahmen der modellprädiktiven Regelung - Vorhersagen über einen zukünftigen Verlauf bzw. ein zukünftiges Verhalten dieser Daten erhalten werden. Diese Vorhersage wird dann im Rahmen einer Überprüfung 141 hinsichtlich ihrer Qualität überprüft, um festzustellen, ob die die Vorhersagequalität innerhalb eines vorgegebenen Bereichs liegt, oder aber außerhalb.

Wenn die Vorhersagequalität innerhalb des vorgegebenen Bereichs liegt und somit hinreichend gut ist, wird eine Optimierung 143 durchgeführt, im Rahmen welcher Stellgrößen für die Regelkreise bzw. Prozesse gesucht werden, mit denen - beispielsweise von extern bzw. einem Bediener oder gemäß einem vorgegebenen Ablaufplan oder dergleichen - vorgegebene Sollwerte 175 von den Regelgrößen möglichst gut und auch gleichzeitig erreicht werden können. Dabei gefundene Werte 170 der Stellgrößen werden dann den betreffenden Prozessen 110, 120 zugeführt bzw. die Stellgrößen werden dort entsprechend eingestellt.

Wenn im Rahmen der Überprüfung 141 der Vorhersagequalität festgestellt wird, dass die Vorhersagequalität außerhalb des vorgegebenen Bereichs liegt und somit nicht ausreichend gut ist, wird das als neuronales Netz abgebildete Modell 142 im Rahmen eines Trainings 160 trainiert bzw. eingelernt.

Während dieses Trainierens wird der Betrieb der verfahrenstechnischen Anlage ohne Verwendung des neuronalen Netzes vorgenommen, vielmehr über klassische Regelung wie vorstehend schon erläutert. Dies ist durch einen gestrichelten Pfeil angedeutet.

Dieses Trainieren erfolgt insbesondere auch basierend auf den bei den Prozessen 110, 120 bzw. allgemein während des Betriebs der verfahrenstechnischen Anlage gewonnen Daten 130. Da während des Trainierens kein neuronales Netz verwendet wird, beruhen die währenddessen gewonnen und auch für das Trainieren verwendeten Daten auf einer klassischen Regelung bzw. einem herkömmlichen Betrieb.

Nach dem Trainieren kann dann wieder automatisiert auf den Betrieb unter Verwendung des als neuronales Netz abgebildeten Modells 142 zurückgeschaltet werden. Auch kann ein initiales Trainieren des neuronalen Netzes auf diese Weise erfolgen.

Das Trainieren kann insbesondere auf einer separaten, auch externen bzw. entfernten Recheneinheit 185 erfolgen, um auf der Recheneinheit 180 Ressourcen einzusparen. Dabei bilden die Recheneinheiten 180 und 185 zusammen aber ein Steuerungs- und Regelungssystem für die verfahrenstechnische Anlage 100, um diese mit dem vorgeschlagenen Verfahren zu betreiben.

## Patentansprüche

1. Verfahren zum Betreiben einer verfahrenstechnischen Anlage (100) mittels einer modellprädiktiven Regelung (140), bei der unter Verwendung eines Modells (142) wenigstens eines Prozesses der verfahrenstechnischen Anlage (100) und unter Beachtung eines Sollwertes (175) für eine Regelgröße ein Wert (130) für eine Stellgröße eines Regelkreises für den wenigstens einen Prozess ermittelt und eingestellt wird, wobei das Modell (142) mittels eines neuronalen Netzes abgebildet wird.

2. Verfahren nach Anspruch 1, wobei das neuronale Netz basierend auf Daten (130) zu Parametern der verfahrenstechnischen Anlage (100) trainiert wird.

3. Verfahren nach Anspruch 2, wobei die Daten (130) im Rahmen eines Betriebs der verfahrenstechnischen Anlage (100) ohne Verwendung eines neuronalen Netzes gewonnen werden.

4. Verfahren nach Anspruch 2 oder 3, wobei das neuronale Netz nur dann trainiert wird, wenn eine Vorhersagequalität der modellprädiktiven Regelung (140) außerhalb eines vorgegebenen Bereichs liegt.

5. Verfahren nach einem der Ansprüche 2 bis 4, wobei die verfahrenstechnische Anlage (100) mittels der modellprädiktiven Regelung ohne Verwendung eines neuronalen Netzes, insbesondere automatisiert, betrieben wird, während das neuronale Netz trainiert wird.

6. Verfahren nach Anspruch 5, wobei zwischen Phasen eines Betriebs in denen das mittels des neuronalen Netzes abgebildete Modell (142) verwendet wird, und Phasen, in denen die verfahrenstechnischen Anlage (100) mittels der modellprädiktiven Regelung ohne Verwendung des neuronalen Netzes betrieben wird, automatisiert gewechselt wird.

7. Verfahren nach einem der vorstehenden Ansprüche, wobei bei der verfahrenstechnischen Anlage (100) eine Vielzahl von Prozessen mit jeweils einem Regelkreis mit jeweils einer Stellgröße und einer Regelgröße vorgesehen ist, und wobei mittels der modellprädiktiven Regelung (140) unter Beachtung eines jeweiligen Sollwerts für die jeweilige Regelgröße jeweils ein Wert (170) für die jeweilige Stellgröße ermittelt und eingestellt wird.

8. Verfahren nach Anspruch 7, wobei Regelkreise verwendet werden, die sich wenigstens teilweise gegenseitig beeinflussen.

9. Verfahren nach Anspruch 7 oder 8, wobei mittels der modellprädiktiven Regelung (140) die Regelgrößen wenigstens teilweise zumindest im Wesentlichen gleichzeitig ermittelt und eingestellt werden.

10. Verfahren nach einem der vorstehenden Ansprüche, wobei als verfahrenstechnische Anlage (100) eine Luftzerlegungsanlage verwendet wird.

11. Steuerungs- und Regelungssystem (140, 160) für eine verfahrenstechnische Anlage (100), das dazu eingerichtet ist, ein Verfahren nach einem der vorstehenden Ansprüche durchzuführen.

12. Verfahrenstechnische Anlage (100), insbesondere Luftzerlegungsanlage, mit einem Steuerungs- und Regelungssystem (140, 160) nach Anspruch 11.
